Europäisches Patentamt

(19) European Patent Office

Office européen des brevets

(11) EP 0 921 413 A2

(12) EUROPEAN PATENT APPLICATION

(43) Date of publication:
09.06.1999 Bulletin 1999/23

(51) Int. Cl.$^6$: G01S 13/38

(21) Application number: 98309874.0

(22) Date of filing: 02.12.1998

(84) Designated Contracting States:
AT BE CH CY DE DK ES FI FR GB GR IE IT LI LU
MC NL PT SE
Designated Extension States:
AL LT LV MK RO SI

(30) Priority: 05.12.1997 JP 35232297

(71) Applicants:
• G.D.S. CO., LTD.
Minato-ku, Tokyo 107-0052 (JP)

• Nagazumi, Yasuo
Meguro-ku, Tokyo 153-0063 (JP)

(72) Inventor: Nagazumi, Yasuo
Tokyo 153-0063 (JP)

(74) Representative:
Rackham, Stephen Neil
GILL JENNINGS & EVERY,
Broadgate House,
7 Eldon Street
London EC2M 7LH (GB)

(54) Spread spectrum radar apparatus

(57) A spread spectrum radar apparatus simplifies the scheme of setting the transmission rest period and can permit free designing of modulation codes that are used in signal transmission. This spread spectrum radar apparatus comprises a signal generator designed in such a way that with a binary pseudorandom periodic code sequence R having a periodic cycle Pr, a binary periodic code sequence Q having a periodic cycle Pq, a phase condition of an output signal at each time according to the code sequence R, or an amplitude condition of an output signal at each time according to the code sequence Q, i.e., presence or absence of an output, based on a sinusoidal signal, is sequentially determined with periods Tr and Tq having a relation of Tr > Tq; an antenna unit for launching an output signal, generated by the signal generator, as an electromagnetic wave; the same antenna unit as mentioned above or another separate antenna unit for catching an echo signal which is the electromagnetic wave returning after being reflected at an outside object; and a receiving unit for receiving the echo signal.

FIG. 1

EP 0 921 413 A2

## Description

The present invention relates to a spread spectrum radar apparatus for use in various radar apparatuses.

One typical radar which is popular today is a pulse radar system which transmits pulsed radio waves having a frequency band of several GHz and power of several MW in a short period of time of several μsec. Since this system has low mean power but very large peak power, expertise is needed in handling the system from the viewpoint of public safety and a special license is essential in using it.

The reason for the principal usage of pulsed radio waves which are frequently used for radars designed for position measurement is to mark the accurate time reference indicative of the launch time on echoes that come from some object. If this marking is accomplished, radio waves need not take the form of pulses.

A pulse compression radar has recently been widely used. Such radar adds phase modulation or frequency modulation to pulses of a relatively long period during the pulse sustaining period, thereby marking a more accurate time reference on launched radio waves. Prolonging the pulse sustaining time however makes close-range observation difficult, so that reduction in peak power has a certain limit.

In a case of utilizing phase shift keying (PSK), it is typical to use Barker codes that have finite bits and indicate an excellent autocorrelation property. Since a limited number of codes with such a property have been found so far, there is a limit to selection of the codes.

A Doppler radar which is not intended for position measurement is mainly used to detect the movement of an object. As the Doppler radar continuously sends out radio waves, it is safer to use and is adapted for use in a variety of apparatuses, such as an automatically-controlled door.

Radars of the type, which can monitor echoes while transmitting radio waves quasi-continuously, can be manufactured economically as well as can significantly reduce the peak power, thus improving the operational safety. This type of radar is welcomed by those who own pleasure-boats or the like and have difficulities for the adaptation of the conventional radars, and has a social significance.

Accordingly, it is an object of the present invention to provide a spread spectrum radar apparatus, which is based on "Random Pulse Type Radar Apparatus", by the same inventor and applicant and filed in the European Patent Office on 24 November 1998 (Attorney's Reference RSJ059S1EP) and claiming priority from Japanese Application No 9-342056 dated November 27, 1997, and which simplifies the scheme of setting the transmission rest period and can permit free designing of modulation codes that are used in signal transmission.

To achieve the object, a spread spectrum radar apparatus according to this invention comprises a signal generator designed in such a way that with a binary pseudorandom periodic code sequence R having a periodic cycle Pr, a binary periodic code sequence Q having a periodic cycle Pq, a phase condition of an output signal at each time according to the code sequence R, or an amplitude condition of an output signal at each time according to the code sequence Q, i.e., presence or absence of an output, based on a sinusoidal signal, is sequentially determined with periods Tr and Tq having a relation of Tr > Tq; an antenna unit for launching an output signal, generated by the signal generator, as an electromagnetic wave; the same antenna unit as mentioned above or another separate antenna unit for catching an echo signal which is the electromagnetic wave returning after being reflected at an outside object; and a receiving unit for receiving the echo signal.

A particular embodiment of this invention will now be described with reference to the accompanying drawings, in which:-

Figure 1 is a general constitutional diagram showing the constitution of one embodiment of this invention;
Figure 2A shows pulse sequences indicating two types of code sequences R and Q that are used in transmission shown in Figure 1;
Figure 2B shows pulse sequences with the passage of time, and illustrates the operation of a radar using the codes shown in Figure 2A, paying attention to echoes coming from a specific target object; and
Figure 2C shows pulse sequences resulting from performing pseudorandom phase modulation on the code sequence Q shown in Figure 2A at its pulse positions.

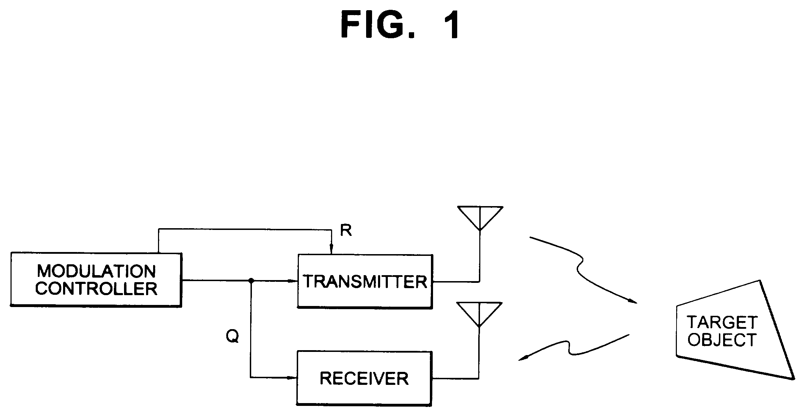

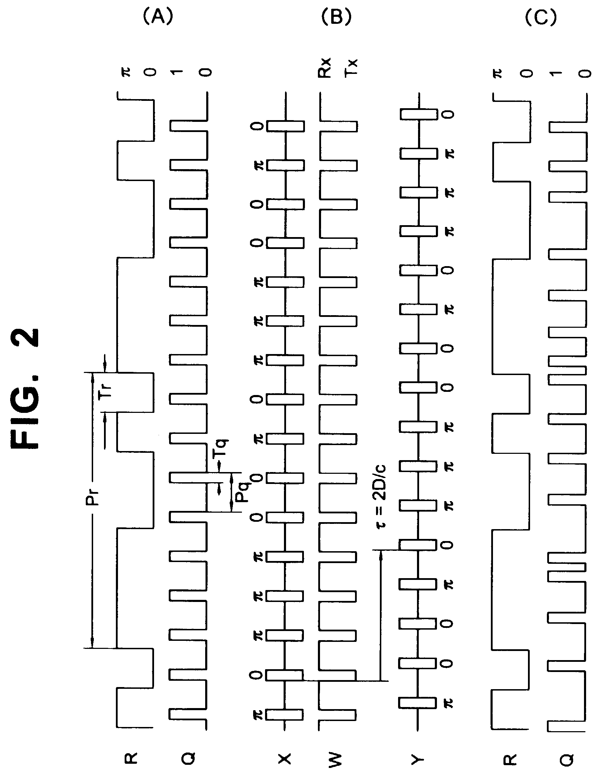

The constitution and operation of one preferred embodiment of the present invention will now be described referring to Figures 1, 2A, 2B and 2C.

Figure 1 shows the general constitution of a radar apparatus. A modulation controller intermittently sets the rest period by controlling the phase of the output of a transmitter according to a binary pseudorandom periodic code sequence R and at the same time controlling the amplitude of the output according to a binary periodic code sequence Q.

This output is transmitted outside from a transmission antenna, and is partially reflected at a target object. This echo is caught by a reception antenna and is input to a receiver. Given that the distance between the reception antenna and the transmission antenna is constant at this time (the distance is of course zero when the same antenna is used for both transmission and reception), the timing at which transmitted radio waves are caught by the reception antenna is determined by the timing of the sequence Q. Therefore, the receiver determines the idling of the reception function in accordance with the status of the sequence Q that is generated by the modulation controller. Accordingly, echoes from an object can always be monitored, though intermittently.

Figure 2A exemplifies two types of code sequences R and Q that are used in the transmission shown in Figure 1. Maximal linear code sequence (M-sequence) pseudorandom codes of L bits are used as the sequence R, and a simple equi-interval pulse sequence with a duty ratio of 20% is used as the sequence Q.

While L = 7 for the M-sequence codes shown in Figure 2A, L can be selected freely according to the measurement precision demanded, and since periodic codes using M-sequence codes have a very excellent autocorrelation property as is well known, the M-sequence codes with large L can suppress the generation of a noise component more than the Barker codes.

Figure 2B illustrates the operation of a radar using the codes shown in Figure 2A with the passage of time, paying attention to echoes coming from a specific target object. In Figure 2B, X represents a transmitted radio wave from the radar and its phase statuses, and W indicates a transmission rest period (hereinafter called "window period"). Y indicates a radio wave reflected from a target object lying at a distance D and its phase statuses.

In the state shown in Figure 2B, echoes are always received in the window period, so that the entire echo energy can be received. If a matched filter is used in the receiver, for example, an outstanding pulse output is detected at the timing at which a code included in the received signal matches with the transmitted code, thereby clarifying the position of the target object.

According to this system, all the echo energy may be received outside the window period at a probability of 20%, depending on the position of a target object, so that the echoes cannot be received theoretically. In the actual usage, however, there is some energy that is monitored within the window period due to the time spread of echoes, practically, no significant problem will arise as long as the window interval Tq is set sufficiently short.

Figure 2C, unlike Figure 2A, shows an example wherein pseudorandom codes are used for the sequence Q. In this example, pseudorandom phase modulation is performed on the sequence Q shown in Figure 2A at its pulse positions in order to overcome the problem that the observation sensitivity at a specific target object becomes lower. In this case, since an approximately constant amount of echo energy can be received, regardless of the position of the target object, local falling of the sensitivity is avoided. This system however affects the autocorrelation property, so that some consideration should be taken in designing the code length and selecting codes.

For example, if a special spread spectrum signal which is output in only a part of one chip time and whose transmission is stopped in the other periods than that period is used in a radar, it is possible to provide a radar apparatus which has significantly lower peak power than that of the prior art and is safer to handle and is more economical.

## Claims

1. A spread spectrum radar apparatus comprising:

   a signal generator designed in such a way that with a binary pseudorandom periodic code sequence R having a periodic cycle Pr, a binary periodic code sequence Q having a periodic cycle Pq, a phase condition of an output signal at each time according to said code sequence R, and an amplitude condition of an output signal at each time according to said code sequence Q, i.e., presence or absence of an output, based on a sinusoidal signal, is sequentially determined with periods Tr and Tq having a relation of Tr > Tq;
   an antenna unit for launching an output signal, generated by said signal generator, as an electromagnetic wave;
   the same antenna unit as mentioned above or another separate antenna unit for catching an echo signal which is said electromagnetic wave returning after being reflected at an outside object; and
   a receiving unit for receiving said echo signal within said timing at which output signal is absent.

2. The spread spectrum radar apparatus according to claim 1, wherein said binary periodic code sequence Q is a pulse sequence which is generated periodically.

3. The spread spectrum radar apparatus according to claim 1, wherein said binary periodic code sequence Q is a pseudorandom code sequence.

4. The spread spectrum radar apparatus according to claim 2, wherein Tr = N · Tq (wherein N is a natural number equal to or greater than 2) and Tr = Pq , and said output signal is generated for 1/N of a period in which a phase designated by said binary pseudorandom periodic code sequence R is constant.

5. The spread spectrum radar apparatus according to claim 3, wherein Tr = N · Tq (wherein N is a natural number equal to or greater than 2), and said output signal is generated for pseudorandomly designated one of N time slots set in a period in which a phase designated by said binary pseudorandom periodic code sequence R is constant.

# FIG. 1

EP 0 921 413 A2

# FIG. 2